# EUROPEAN PATENT APPLICATION

(11) **EP 2 537 505 A2**
(43) Date of publication of application: **26.12.2012**
(21) Application number: 12171758.1
(22) Date of filing: 13.06.2012
(51) Int. Cl.: A61J 1/14

(54) **Medicine package**

(30) Priority: 21.06.2011 JP 2011136938
(71) Applicant: MIURA CO., LTD., Matsuyama-shi Ehime 799-2696 (JP)
(72) Inventor: Kano, Katsuaki, Ehime, 799-2696 (JP); Hamada, Yusuke, Ehime, 799-2696 (JP); Arimitsu, Yasuyuki, Ehime, 799-2696 (JP)
(74) Representative: Schwabe - Sandmair - Marx

(57) **Abstract**

A medicine package (50) includes: a container (51) configured to contain a fluid medicine; a tube body (52) configured to connect an interior and an exterior of the container (51), and disposed at a lower end of the container (51) ; and a tube (53) made of an elastic material, the tube (53) having one end connected to the tube body (52) and the other end provided with a nozzle (54) configured to discharge the medicine, wherein the container (51) is configured to be formed of a soft sheet (70) and be bag-shaped and to have a gusset (71) and an inner surface of at least a part of the container (51) is configured to be funnel-shaped to direct the medicine to the tube body (52).

## Description

### FIELD

Embodiments described herein relate generally to a medicine package.

### BACKGROUND

There is known a measuring device that measures dissolved oxygen concentration, hardness, pH, residual chlorine concentration, and the like of supply water to boilers and service water and drainage water to cooling towers and various other water treatment plants by adding a predetermined medicine to sample water obtained in a cell, and detecting a change of the sample water caused by the addition of the medicine as a change in intensity of transmitted light (Japanese Patent No. 3214400, for example).

With this type of measuring devices, an improvement of medicine adding devices have been made for use in automatic measurement. For example, Japanese Patent Nos. 3214400 and 3186577 disclose an adding device including a medicine cartridge, and an adding mechanism for gradually adding a medicine from the medicine cartridge to sample water in a cell. Here, the medicine cartridge is provided with a medicine package housed within a case, and the medicine package includes a container for containing a fluid medicine, a tube body (connecting unit) for connecting an exterior and an interior of the container, and a tube made of an elastic material connected to the tube body on one end and having a nozzle for discharging the medicine on the other end. The adding mechanism is configured to pull out the tube by rotating a pressing roller to cause the medicine to flow from the container into the tube through the tube body, and to discharge the medicine through the nozzle.

The container used for the medicine package is a molded product made of a resin material such as a polypropylene resin or a polyethylene resin, and maintains a certain shape. Therefore, in order to stably discharge the medicine through the nozzle of the tube by the adding mechanism, it is necessary to provide the container with an inlet for external air. However, external air flowing into the container through the inlet may possibly denature the medicine within the container. For example, in the measurement of dissolved oxygen concentration and residual chlorine concentration of the sample water, it is necessary to add a redox coloring reagent as a medicine to the sample water. However, when this type of coloring reagent is exposed to external air, the reagent itself is oxidized-reduced. Therefore, an application of redox medicines to the adding device described above is practically difficult.

An object of the present invention is to provide a medicine package allowing smooth discharge of a medicine from a container while preventing the medicine contained within the container from being exposed to external air, where the medicine package includes a container configured to contain a fluid medicine, and a tube made of an elastic material and communicated to the container, the tube having a nozzle for discharging the medicine at a tip end of the tube.

### BRIEF DESCRIPTION OF THE SEVERAL VIEWS OF THE DRAWINGS

FIG. 1 is an exemplary schematic view illustrating a measuring device having a medicine package according to one embodiment of the present invention;
FIG. 2 is an exemplary vertical cross-sectional view illustrating a reagent supply unit provided for the measuring device, seen from a direction of II in FIG. 1;
FIG. 3 is an exemplary perspective view illustrating the medicine package;
FIG. 4 is an exemplary cross-sectional view illustrating one example of a sheet used for the medicine package;
FIG. 5 is an exemplary cross-sectional view illustrating another example of the sheet used for the medicine package; and
FIG. 6 is an exemplary vertical cross-sectional view illustrating a nozzle provided for the medicine package.

### SUMMARY

To overcome the problems and achieve the object mentioned above, a medicine package comprises: a container configured to contain a fluid medicine; a tube body configured to connect an interior and an exterior of the container, and disposed at a lower end of the container; and a tube made of an elastic material, the tube having one end connected to the tube body and the other end provided with a nozzle configured to discharge the medicine, wherein the container is configured to be formed of a soft sheet and be bag-shaped and to have a gusset and an inner surface of at least a part of the container is configured to be funnel-shaped to direct the medicine to the tube body.

### DETAILED DESCRIPTION

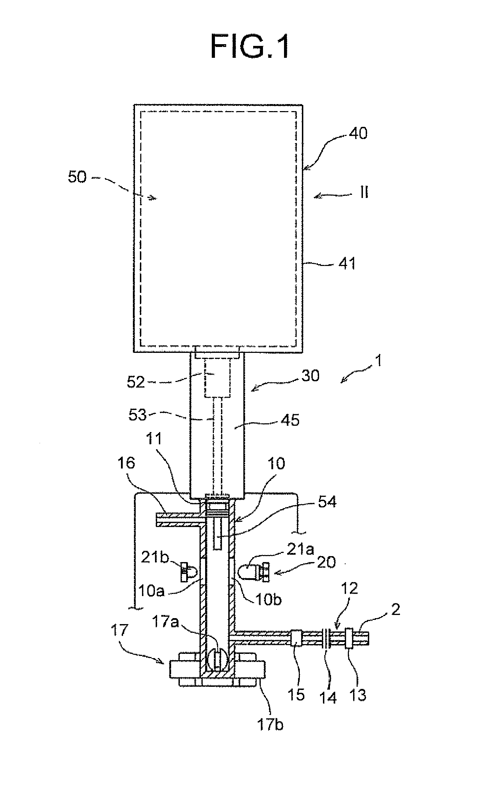

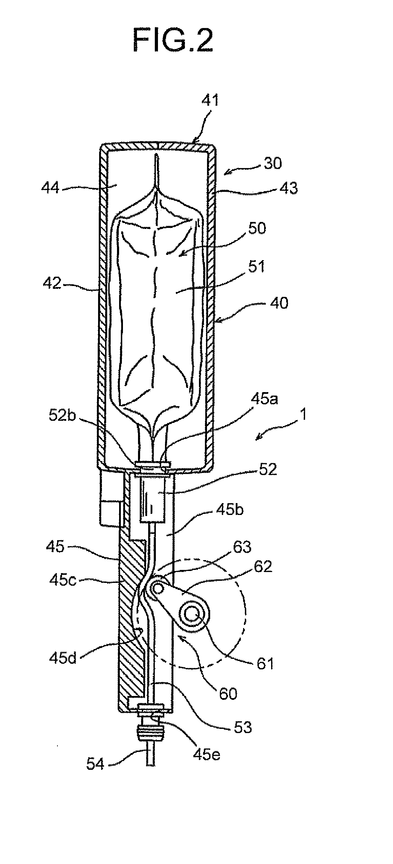

A measuring device having a medicine package according to one embodiment of the present invention will be described with reference to FIG. 1 and FIG. 2. The embodiment relates to a medicine package and in particular to a medicine package having a nozzle for discharging a fluid medicine. Referring to FIG. 1 and FIG. 2, a measuring device 1 is configured to measure dissolved oxygen concentration in sample water, and provided with a measurement cell 10, a measuring unit 20, and a reagent supply unit 30 as major components.

The measurement cell 10 is, for example, an opaque container made of a PPS (polyphenylene sulfide) resin molded into a tubular shape, and having a pair of light transmission windows 10a and 10b facing toward each other set in respective side walls and an opening 11 at the top. Further, an inlet channel 12 connected to a flow channel 2 and configured to supply the measuring device 1 with sample water to be measured is provided at a portion of the side wall of the measurement cell 10 near a bottom. The inlet channel 12 includes a filter 13, a constant flow valve 14, and an electromagnetic valve 15 in this order from the side of the flow channel 2, and the valves are set in a manner that allows supply of sample water from the flow channel 2 to the measurement cell 10. In addition, an outlet channel 16 configured to discharge the sample water outside is provided at a portion of the side wall of the measurement cell 10 near the opening 11.

Moreover, an agitating device 17 is provided at a portion of the bottom of the measurement cell 10. The agitating device 17 includes an agitator 17a and a stator 17b. The agitator 17a is rotatably provided on the bottom of the measurement cell 10, and contains a magnet (not illustrated). The stator 17b is provided outside the measurement cell 10 so as to surround the agitator 17a, and includes an electromagnetic induction coil. The electromagnetic induction coil is configured to be supplied with current from a power source (not illustrated).

The measuring unit 20 is configured to measure intensity of transmitted light of light having a required wavelength through the sample water, and includes a light emitter 21a and a light receiver 21b that are facing toward each other with the light transmission windows 10a and 10b sandwiched therebetween. Here, the light emitter 21a is, for example, an LED (light-emitting diode) capable of emitting light of a required wavelength, and the light receiver 21b is, for example, a phototransistor capable of receiving the light from the light emitter 21a that passes through the light transmission windows 10a and 10b.

The reagent supply unit 30 is, as shown in FIG. 2, provided with a reagent cartridge 40 disposed in a manner removable from the opening 11 of the measurement cell 10, and a discharge device 60 configured to discharge a reagent from the reagent cartridge 40 to the measurement cell 10 as major components. The reagent cartridge 40 includes a hollow cartridge case 41 and a medicine package 50 housed in the case.

The cartridge case 41 is a resin molded product and is divided into two pieces of a front case 42 and a back case 43 in order to house the medicine package 50 therein. The cartridge case 41 formed by combining the front case 42 and the back case 43 includes a container housing 44 that is formed basically in a cuboid shape and a tubular roller in-out unit 45 that extends from a center of a bottom surface of the container housing 44. A tube body stopping piece 45a is provided at a base end of the roller in-out unit 45 toward an interior of the cartridge case 41. The tube body stopping piece 45a is a projection for holding a tube body 52 (to be described later) of the medicine package 50. Further, a nozzle stopping piece 45e is provided at a tip end of the roller in-out unit 45 toward the interior of the cartridge case 41. The nozzle stopping piece 45e is a projection for holding a nozzle 54 (to be described later) of the medicine package 50. Moreover, a slit 45b that extends in a vertical direction is provided on a side of the back case 43 of the roller in-out unit 45. Furthermore, a pressing surface 45c facing toward the slit 45b is provided in the vertical direction for an inner surface of the roller in-out unit 45 on a side of the front case 42. The pressing surface 45c includes a curved surface 45d that is recessed in an arc in a substantial central portion in the vertical direction.

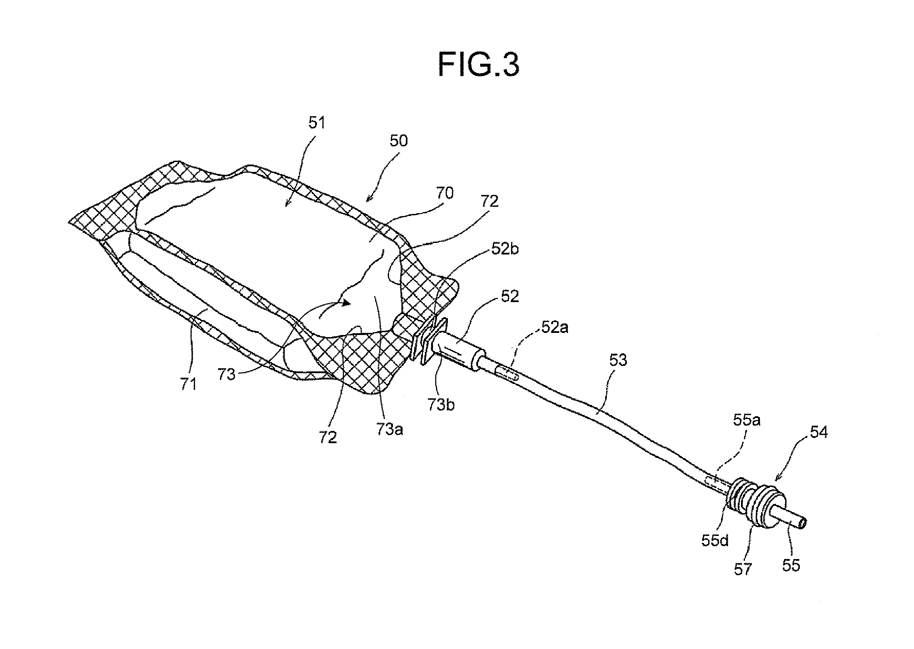

As shown in FIG. 3, the medicine package 50 includes a container 51 configured to contain a fluid reagent (medicine), the tube body 52, a tube 53, and the nozzle 54. The container 51 is, for example, a bag configured by bonding periphery portions (shaded areas in FIG. 3) of several pieces of soft sheets 70 cut in a desired shape in an air tight manner, and includes a gusset 71 on each side end that expands in a through-thickness direction when a reagent is filled therein. The container 51 is a closed bag.

It should be noted that the reagent contained in the container 51 in this embodiment is used for measuring the dissolved oxygen concentration in the sample water, and obtained by dissolving a medicine that develops color by reaction with oxygen (for example, indigocarmine) along with a reducing agent in a solvent such as water or an alcohol compound (in particular, a polyalcohol compound such as a glycol compound).

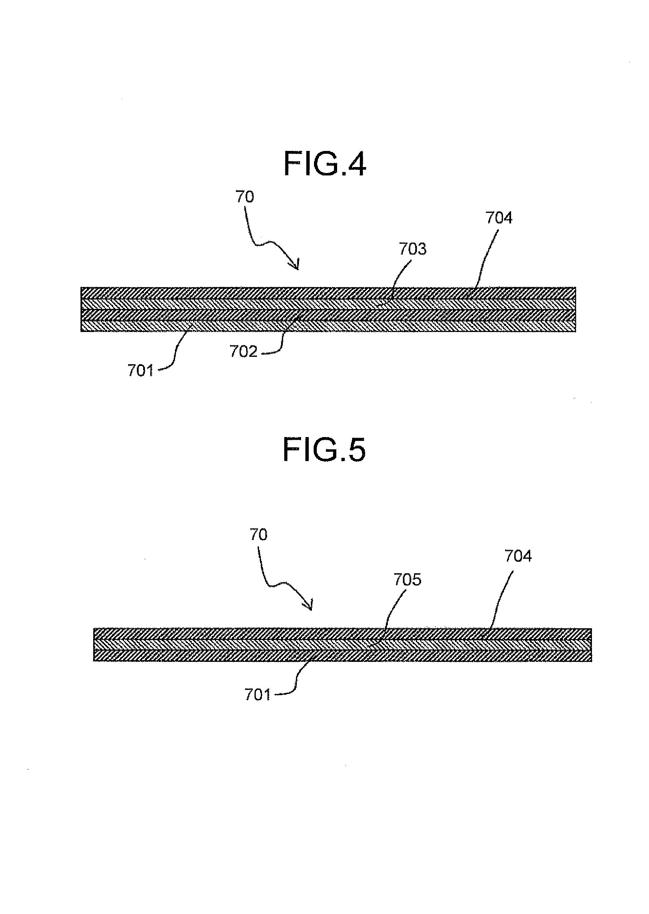

In order to improve preservation stability of a reagent, it is desirable that the sheet 70 used herein has gas barrier properties and light-blocking properties allowing to prevent intrusion of the external air, as well as chemical resistance and heat welding properties within the container 51. Examples of the sheet 70 include a four-layer sheet in which, as shown in FIG. 4, a linear low density polyethylene film layer 701, a stretched polyamide film layer 702, an aluminum foil layer 703, and a stretched polyethylene terephthalate film layer 704 are laminated from an interior to an exterior of the container 51 with an adhesive layer interposed between the layers. The examples of the sheet 70 also include a three-layer sheet, as shown in FIG. 5, the linear low density polyethylene film layer 701, an aluminum oxide vapor deposition polyamide film layer 705, and the stretched polyethylene terephthalate film layer 704 are laminated from the interior to the exterior of the container 51 with an adhesive layer interposed between the layers. In a case in which such a laminated sheet is used, the container 51 can be formed by heat-welding inner surfaces of the several pieces of sheets 70 cut in a desired shape with each other. It should be noted that various adhesives, including a polyurethane-based, an epoxide-based, a polyester-based, a cyanoacrylate-based, a polyacrylic-acid-ester-based, and a polyvinyl acetate adhesives, can be used as the adhesive layer in the laminated sheets.

The tube body 52 is a component made of a resin having chemical resistance and both ends of the tube body 52 are open (for example, a molded product made of a high-density polyethylene resin), and includes a connector unit 52a, on one end, whose diameter is contracted. In addition, a receiving section 52b that engages with the tube body stopping piece 45a of the cartridge case 41 is provided substantially in a central portion of an outer circumference of the tube body 52 in a length direction. The tube body 52 is disposed so as to connect the interior and the exterior of the container 51 at a lower end of the container 51 in a central potion, and a portion of the tube body 52 from the receiving section 52b to the connector unit 52a protrudes from the container 51.

Here, the inner surface of the sheet 70 is adhered to an outer circumferential surface of an end portion of the tube body 52 disposed within the container 51 in an air tight manner. Further, an inclined section 72 is provided for an adhered section between the sheets 70 such that a lower part of the interior, i.e., an internal space, of the container 51 forms a funnel shape along with the tube body 52 as a stem. The container 51 has a funnel section 73. The funnel section 73 includes a wide portion 73a at the top and a stem portion 73b at the bottom. The wide portion 73a may be pyramid-shaped. However, it is not limited to this, but the wide portion 73a may be conical-shaped. The wide portion 73a may have a square, rectangular, round, triangular, or any other shaped flat base and sloping sides that meet in a point at the bottom. The stem portion 73b is positioned at the apex of the wide portion 73a. The stem portion 73b is narrower tube than the wide portion 73a and is a stem of the funnel section 73. The stem portion 73b corresponds to the tube body 52. The funnel section 73 channels the medicine contained in the container 51 through the tube body 52 into the tube 53. The tube body 52 functions as the stem portion 73b, or the stem of the funnel section 73. The container 51 is configured by the soft sheets 70 and provided as a bag having the gusset 71 on either side, and the interior of the container 51 is formed in the funnel shape with the tube body 52 as the stem. The inner surface of at least a part of the container 51 tapers toward the tube body 52. The inner surface of the wide portion 73a tapers toward the stem portion 73b.

The tube 53 is made of an elastic material, and coupled with the tube body 52 by inserting the connector unit 52a of the tube body 52 into one end of the tube.

Examples of the elastic material that forms the tube 53 include a binary fluorine rubber such as a copolymer of vinylidene fluoride and hexafluoropropylene. As the binary fluorine rubber is superior in gas barrier properties (in particular, oxygen barrier properties) and chemical resistance, the binary fluorine rubber is particularly suitable when the reagent contained in the container 51 is a redox reagent for measuring the dissolved oxygen concentration in the sample water. In general, the tube 53 can be formed by press molding.

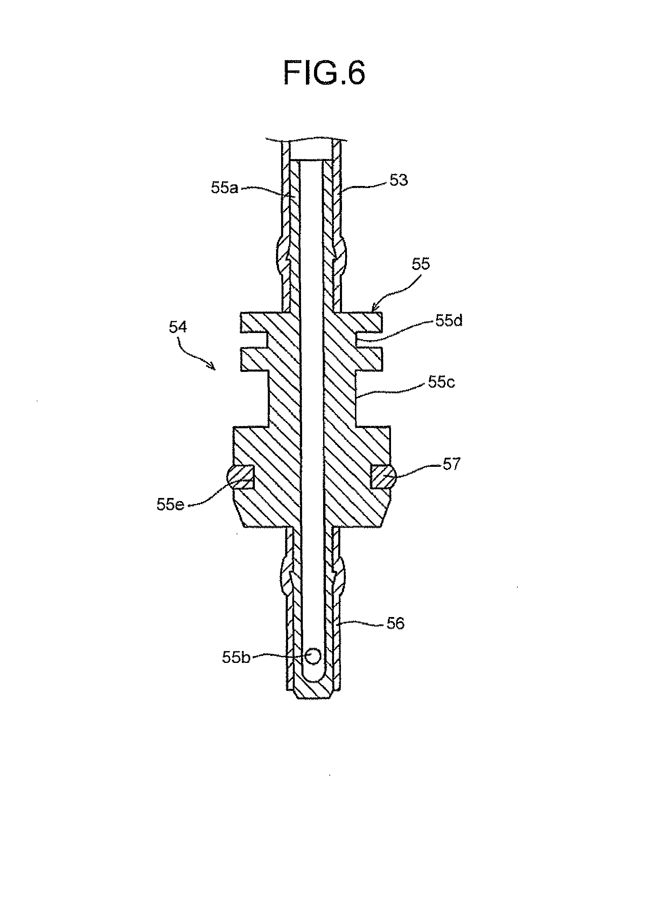

The nozzle 54 is configured to discharge the reagent contained in the container 51, and connected to a tip end of the tube 53. As shown in FIG. 6, the nozzle 54 includes a nozzle main body 55 in a tubular shape whose base end is open and tip end is closed, and a valve rubber 56 attached around an outer circumferential surface of the nozzle main body 55 on the tip end side. The nozzle main body 55 is a component made of a resin having chemical resistance (for example, a molded product made of a high-density polyethylene resin), and an inner diameter of the nozzle main body 55 is set to be even in the length direction. On the base end side of the nozzle main body 55, a connector unit 55a is provided, and the connector unit 55a is inserted into the tip end of the tube 53. Further, in either side surface of the nozzle main body 55 on the tip end side, there is provided a discharge hole 55b penetrating through the side surface in a direction perpendicular to a center axis of the nozzle main body 55. Specifically, the nozzle main body 55 includes two discharge holes 55b that communicate with an interior of the nozzle main body 55. Further, a thick stepped section 55c is provided in a substantial central portion of the nozzle main body 55 in the length direction around the outer circumference. A receiving section 55d that engages with the nozzle stopping piece 45e of the cartridge case 41 is provided around the outer circumference of the stepped section 55c on the base end side. Further, a groove 55e is provided around the outer circumference of the stepped section 55c on the tip end side, and a seal ring 57 (for example, a D ring made of a fluorine rubber) is attached to the groove 55e. The valve rubber 56 is a tube made of an elastic material having chemical resistance (for example, a polyolefin rubber), attached around the outer circumferential surface of the nozzle main body 55 on the tip end side so as to close the two discharge holes 55b.

The medicine package 50 described above is configured such that the receiving section 52b of the tube body 52 is engaged with the tube body stopping piece 45a of the cartridge case 41, and the container 51 is disposed upright within the container housing 44. Further, the tube 53 extends downward within the roller in-out unit 45, and the receiving section 55d of the nozzle main body 55 is engaged with the nozzle stopping piece 45e of the cartridge case 41. As a result, the fluid reagent contained in the container 51 fills the tube 53 through the tube body 52, and an outflow of the fluid reagent through the discharge hole 55b of the nozzle main body 55 is prevented by the valve rubber 56. It should be noted that when the reagent cartridge 40 is attached, the nozzle 54 is disposed such that a tip end section thereof protrudes into the measurement cell 10, and attached to an inner surface of the measurement cell 10 in an air tight manner by the seal ring 57.

The discharge device 60 is configured to discharge the reagent contained in the container 51 of the medicine package 50, and includes a rotary driving shaft 61 connected to a motor that is not illustrated, a driving arm 62, and a pressing roller 63 as major components. The rotary driving shaft 61 is provided outside the slit 45b and rotatable in a counterclockwise direction in FIG. 2. One end of the driving arm 62 is coupled to the rotary driving shaft 61, and the pressing roller 63 is rotatably attached to the other end. The driving arm 62 is rotatable in the counterclockwise direction by rotation of the rotary driving shaft 61, as shown by a chain-double dashed line in FIG. 2, and configured to allow the pressing roller 63 to come into and out from the roller in-out unit 45 through the slit 45b by this rotation of the driving arm 62.

The measuring device 1 described above is provided with a control device (not illustrated), and measures the dissolved oxygen concentration in the sample water by the control device controlling operations of the respective components as described in the following description.

Next, an operation of water examination of the sample water by the measuring device 1 will be described.

First, the electromagnetic valve 15 of the measuring device 1 is set to an open state. With this, the sample water flows into the measurement cell 10 from the flow channel 2 through the inlet channel 12. At this time, foreign substances contained in the sample water are removed through the filter 13. Further, an amount of the sample water that flows into the measurement cell 10 is controlled by the constant flow valve 14. The sample water continuously flowing into the measurement cell 10 fills the measurement cell 10, and is continuously discharged through the outlet channel 16. At this time, when the electromagnetic induction coil of the stator 17b is energized, a magnetic field generated by the energization is received by the magnet of the agitator 17a, and whereby the agitator 17a within the measurement cell 10 rotates. Accordingly, the sample water that has flowed into the measurement cell 10 is agitated, and the measurement cell 10 is pre-washed by the sample water.

After the pre-washing as described above, when the energization of the electromagnetic induction coil of the stator 17b is suspended and the electromagnetic valve 15 is closed, the inflow of the sample water into the measurement cell 10 is prevented, and the sample water is pooled in the measurement cell 10 up to a level of the outlet channel 16. As a result, a tip end portion of the nozzle 54 is disposed within the pooled sample water. The measuring unit 20 is operated in this state, and light is emitted from the light emitter 21a to the light receiver 21b. Then, intensity of the transmitted light of the light emitted from the light emitter 21a through the sample water is measured.

Next, the energization of the electromagnetic induction coil of the stator 17b is resumed to resume the rotation of the agitator 17a, and the motor of the discharge device 60 is driven at the same time while maintaining this state to rotate the rotary driving shaft 61. As a result, the driving arm 62 rotates in the counterclockwise direction in FIG. 2, and this causes the pressing roller 63 to rub the tube 53 down while pressing the tube 53 against the pressing surface 45c. Then, the reagent that flows from the container 51 into the tube 53 through the tube body 52 is pumped to the nozzle 54, and overflows from the discharge hole 55b of the nozzle main body 55. With this, a gap is provided between the nozzle main body 55 and the valve rubber 56, and through this gap, a certain amount of reagent is discharged into the sample water within the measurement cell 10. Therefore, by repeating the rotational movement of the driving arm 62, the certain amount of reagent is intermittently injected into the sample water every time the driving arm 62 rotates.

In this case, as the container 51 is configured by the soft sheets 70 and includes the gusset 71 on each side, the container 51 shrinks such that the gussets 71 are closed as the reagent is discharged through the nozzle 54. Thus, the container 51 allows the reagent to be discharged through the nozzle 54 without causing external air to enter, and is able to stably maintain the contained reagent without causing denaturation due to an influence of the external air. The container 51 is deformable such that a thickness of the container 51 is reduced when the medicine is discharged from the nozzle 54. In this embodiment, by using the gussets 71, the container 51 is deformable such that the thickness of the container 51 is reduced when the medicine is discharged from the nozzle 54. However, it is not limited to using the gussets 71 in order for the container 51 to be deformable such that the thickness of the container 51 or volume of the container 51 is reduced when the medicine is discharged from the nozzle 54. Any configuration other than the gussets 71 can be used in order for the container 51 as the closed bag to be deformable such that the thickness or the volume of the container 51 is reduced when the medicine is discharged from the nozzle 54. Further, as the internal space of the container 51 is formed in a funnel shape as described above, the contained reagent can be smoothly directed toward the tube body 52, and whereby the reagent can smoothly flow into tube body 52. Therefore, it is possible to use up the reagent contained in the container 51 to the last drop.

The reagent thus injected into the measurement cell 10 is dissolved into the sample water that is agitated by the rotation of the agitator 17a, and reacts with dissolved oxygen contained in the sample water to change the color of the sample water.

In the step of reagent injection as described above, the control device maintains the rotation of the agitator 17a, and causes the measuring unit 20 to continuously measure intensity of transmitted light (I) of the sample water that changes its color by the gradually injected reagent. At this time, the control device determines an amount of change in the intensity of transmitted light associated with an increase of the amount of the reagent injected into the sample water. The amount of change in the intensity of transmitted light determined here is usually taken as a difference between the intensity of transmitted light before and after the certain amount of reagent is injected (ΔI). In general, the intensity of transmitted light of the sample water gradually decreases according to the number of times that the reagent is injected (i.e., the number of times of the rotational movement of the driving arm 62) increases. In this case, if all the dissolved oxygen in the sample water has reacted with the reagent that has been injected in the Xth time and before, it is difficult to further change the color of the sample water by injecting more reagent in the injecting operation after the Xth time, and the intensity of transmitted light of the sample water is less likely to change. Specifically, a difference between intensity of transmitted light I¹ after the Xth time of the reagent injection and intensity of transmitted light I² after the (X+1) th time of the reagent injection (I¹-I², i.e., ΔI described above) is very small. Therefore, once ΔI reaches a predetermined amount or smaller, the reagent injected into the sample water thereafter remains as it is in the sample water without affecting the reaction with the dissolved oxygen in the sample water.

Accordingly, the control device stops the rotation of the driving arm 62 when it is determined that ΔI has reached the predetermined amount or smaller. This stops additional injection of the reagent to the sample water. Subsequently, the control device obtains a ratio between intensity of transmitted light (I^{B}) of the sample water at this time and intensity of transmitted light (I^{A}) of the sample water before injecting the reagent (ratio of intensity of transmitted light I^{B}/I^{A}). Then, based on previously prepared data for standard curves of the ratio of intensity of transmitted light and the dissolved oxygen concentration, the control device calculates the dissolved oxygen concentration in the sample water.

After measuring the dissolved oxygen concentration in the sample water in this manner, the agitator 17a is again rotated and the electromagnetic valve 15 is opened, and the reagent-containing sample water pooled in the measurement cell 10 is pushed out by the sample water that newly flows through the inlet channel 12, and is discharged through the outlet channel 16. In this manner, the cleaning of the measurement cell 10 is completed.

It should be noted that in the water examination of the sample water as described above, when the reagent filled within the medicine package 50 runs out, although it is possible to replace only the medicine package 50 by removing the reagent cartridge 40 and dividing the cartridge case 41 into the front case 42 and the back case 43, it is usually preferable to replace the removed reagent cartridge 40 as a whole with a new one.

The above embodiment describes the case in which the reagent for measuring the dissolved oxygen concentration in the sample water is contained in the container 51 of the medicine package 50 is described. However, the reagent (medicine) can be a different reagent for measuring a different water quality index of the sample water such as residual chlorine concentration, hardness, silica concentration, M alkalinity, or pH, for example. In this case, when measuring residual chlorine concentration, similarly to the case of the measurement of dissolved oxygen concentration, it is necessary to use a redox reagent (medicine) that is susceptible to denaturation due to the external air. However, for the other water quality indices, a reagent that is insusceptible to an influence of the external air, such as a chelating agent or a complexing agent, can be used. Therefore, for the medicine package 50 for measuring a different water quality index, it is possible to use a polyolefin rubber such as "PharMed", which is a trademark of Saint-Gobain K.K. as an elastic material formed into the tube 53. In this case, the tube 53 can be formed by extrusion molding.

The medicine package is provided with the container, the tube body, and the tube described above, and thus allows smooth discharge of the medicine from the container through the tube body and the tube while preventing the medicine contained within the container from being exposed to the external air.

## Claims

1. A medicine package (50), comprising:
a container (51) configured to contain a fluid medicine;
a tube body (52) configured to connect an interior and an exterior of the container (51), and disposed at a lower end of the container (51); and
a tube (53) made of an elastic material, the tube (53) having one end connected to the tube body (52) and the other end provided with a nozzle (54) configured to discharge the medicine, wherein
the container (51) is configured to be formed of a soft sheet (70) and be bag-shaped and to have a gusset (71) and an inner surface of at least a part of the container (51) is configured to be funnel-shaped to direct the medicine to the tube body (52).

2. The medicine package (50) according to claim 1, wherein
the soft sheet (70) is a laminated sheet including a linear low density polyethylene film layer, a stretched polyamide film layer, an aluminum foil layer, and a stretched polyethylene terephthalate film layer, laminated from inside to outside of the container (51).

3. The medicine package (50) according to claim 1, wherein
the soft sheet (70) is a laminated sheet including a linear low density polyethylene film layer, an aluminum oxide vapor deposition polyamide film layer, and a stretched polyethylene terephthalate film layer, laminated from inside to outside of the container (51).

4. The medicine package (50) according to any one of claims 1 to 3, wherein
the soft sheets (70) includes a plurality of the soft sheets (70), and
inner surfaces of the soft sheets (70) are welded to each other such that the inner surface of the at least part of the container (51) is configured to be funnel-shaped.

5. The medicine package (50) according to any one of claims 1 to 4, wherein
the container (51) is configured to have a funnel section (73) including a wide portion (73a) and a stem portion (73b) that is narrower than the wide portion (73a), and
the funnel section (73) is configured to channel the medicine through the tube body (52) into the tube (53), and
the tube body (52) is configured to function as the stem portion (73b) of the funnel section (73).

6. The medicine package (50) according to claim 4, wherein
an inclined section (72) is configured to be provided at an adhered section between the sheets (70) such that the inner surface of the at least part of the container (51) is configured to be funnel-shaped.

7. The medicine package (50) according to any one of claims 1 to 6, wherein
the container (51) is configured to be a closed bag.

8. The medicine package (50) according to any one of claims 1 to 7, wherein
the container (51) is configured to have a plurality of side gussets (71).

9. The medicine package (50) according to any one of claims 1 to 8, wherein
the container (51) is configured to be deformable such that a thickness of the container (51) is reduced when the medicine is discharged from the nozzle (54).

10. The medicine package (50) according to any one of claims 1 to 9, wherein
the inner surface of the at least a part of the container (51) is configured to taper toward the tube body (52).

11. The medicine package (50) according to claim 5, wherein
the inner surface of the wide portion (73a) of the funnel section (73) of the container (51) is configured to taper toward the tube body (52).
